# EUROPÄISCHE PATENTSCHRIFT

(11) **EP 3 972 713 B1**
(45) Veröffentlichungstag und Bekanntmachung des Hinweises auf die Patenterteilung: **17.04.2024**
(21) Anmeldenummer: 20742227.0
(22) Anmeldetag: 15.07.2020
(51) Int. Cl.: B01D 29/23, B01D 35/02, B01D 35/147, B01D 35/027

(54) **FILTERVORRICHTUNG**
FILTER APPARATUS
DISPOSITIF DE FILTRATION

(30) Priorität: 25.07.2019 DE 102019005323; 25.07.2019 DE 102019005325; 25.07.2019 DE 102019005324; 25.07.2019 DE 102019005326
(43) Veröffentlichungstag der Anmeldung: 30.03.2022
(73) Patentinhaber: RT-Filtertechnik GmbH, 88048 Friedrichshafen (DE)
(72) Erfinder: STEHLE, Gerhard, 78467 Konstanz (DE)
(74) Vertreter: Bartels und Partner, Patentanwälte
(86) Internationale Anmeldenummer: PCT/EP2020/069966
(87) Internationale Veröffentlichungsnummer: WO 2021/013648

(56) Entgegenhaltungen:
- DE-A1-102010 049 974
- DE-A1-102015 012 558
- DE-A1-102016 001 025
- US-A- 5 753 117

## Beschreibung

Die Erfindung betrifft eine Filtervorrichtung mit den Merkmalen in Oberbegriff von Anspruch 1.

Filtervorrichtungen dieser Art sind in einer Vielzahl von Ausgestaltungen und mit auswechselbaren Filterelementen, die unterschiedlichen Spezifikationen entsprechen, Stand der Technik. Die Filterelemente werden bei derartigen Filtervorrichtungen zur Pflege von Fluiden, insbesondere in hydraulischen Systemen, benutzt. Wie in dem Dokument DE 10 2015 003 604 A1 aufgezeigt ist, das eine Filtervorrichtung der eingangs genannten Gattung offenbart, sind solche Filtervorrichtungen mit Vorteil als sog. In-Tank-Filtervorrichtungen konzipierbar. Bei solchen Lösungen erstreckt sich das Filterelement, ausgehend vom Deckelteil, das den Verschluss einer Wandöffnung eines das Fluid bevorratenden Behälters oder Tanks bildet, ins Innere des Tanks. Dabei ist die Länge des Filterelements so bemessen, dass sich die untere Endkappe unterhalb des niedrigsten, im Betrieb zu erwartenden Fluidniveaus befindet. Für den Filtrierbetrieb tritt das Unfiltrat über eine Öffnung in der unteren Endkappe in den inneren Filterhohlraum des Filterelements ein. Nach Durchströmen des Elementmaterials von innen nach au-ßen gelangt das Fluid als Filtrat zum Tankinneren.

Die DE 10 2016 006 833 A1, die DE 10 2017 011 523 A1, die US 5 753 117 A und die DE 10 2016 001 025 A1 beschreiben jeweils eine Filtervorrichtung mit den Merkmalen im Oberbegriff von Anspruch 1 mit einem Filtergehäuse, in dem ein austauschbares Filterelement aufgenommen ist und das ein Deckelteil aufweist, wobei das Elementmaterial endseitig von mindestens einer Endkappe begrenzt ist, wobei mindestens diese eine Endkappe des Filterelements auf einen Fluidkanal aufgesetzt ist und dass zwischen dieser einen Endkappe und dem Fluidkanal eine Einrichtung zur Querkraftabstützung für das Filterelement vorgesehen ist, die das Filterelement gegenüber dem in das Innere des Filterelementes zumindest teilweise endseitig eingreifenden Fluidkanal abstützt.

Weitere Filtervorrichtungen gehen aus der DE 10 2010 049 974 A1 und der DE 10 2015 012 558 A1 hervor.

Ausgehend von diesem Stand der Technik stellt sich die Erfindung die Aufgabe, eine Filtervorrichtung der eingangs genannten Gattung zur Verfügung zu stellen, die sich durch ein besonders günstiges Betriebsverhalten auszeichnet.

Erfindungsgemäß ist diese Aufgabe durch eine Filtervorrichtung gelöst, die die Merkmale des Patentanspruchs 1 in seiner Gesamtheit aufweist.

Gemäß dem kennzeichnenden Teil des Patentanspruchs 1 besteht eine wesentliche Besonderheit der Erfindung darin, dass die Einrichtung zur Querkraftabstützung aus einer Hülse gebildet ist, die auf der einen Seite einen nach innen eingezogenen Rand aufweist und auf der anderen Seite als Teil einer Führung für den Fluidkanal eine Umfassungswand bildet, und dass außenumfangsseitig an der Umfassungswand ein stegartiger Ringflansch ausgebildet ist, der in eine stufenförmige Ausnehmung in der einen Endkappe eingreift.

Es ist ferner vorgesehen, dass mindestens diese eine Endkappe des Filterelements auf einen Fluidkanal aufgesetzt ist und dass zwischen dieser einen Endkappe und dem Fluidkanal eine Einrichtung zur Querkraftabstützung für das Filterelement vorgesehen ist, die das Filterelement gegenüber dem in das Innere des Filterelementes zumindest teilweise endseitig eingreifenden Fluidkanal abstützt. Bei Einbau der Filtervorrichtung in einen Behälter oder Tank mit Verankerung des Fluidkanals im Tank, beispielsweise durch Befestigung am Tankboden, bildet die zwischen der Endkappe und dem Fluidkanal wirksame Querkraftabstützung eine Sicherung gegen eine Verlagerung oder Verwindung des Filterelements durch auf dessen Außenseite einwirkende Kräfte. Entsprechende Belastungen ergeben sich beispielsweise bei Einsatz der Vorrichtung bei mobilen Arbeitsgerätschaften, wobei durch Bewegungen des Tanks verursachtes Schwappen des Fluids Strömungskräfte am Filterelement wirken können, ebenso wie die dynamische Belastungen durch wirkende Beschleunigungskräfte.

Bei einer bevorzugten Ausführungsform der erfindungsgemäßen Filtervorrichtung ist vorgesehen, dass die Endkappe die Einrichtung zur Querkraftabstützung aufweist, die vorzugsweise als Einsatzteil ausgebildet mit der Endkappe verbunden ist. Dergestalt lässt sich in herstelltechnisch besonders günstiger Weise die Einrichtung zur Querkraftabstützung mit der Endkappe als dem einen Abschluss des Elementmaterials verbinden. Es sind auch Lösungen denkbar, bei der die Einrichtung zur Querkraftabstützung einstückiger Bestandteil der zuordenbaren Endkappe ist.

Für eine verbesserte Führung kann ferner in vorteilhafter Weise vorgesehen sein, dass die Umfassungswand in Richtung auf ihren nach innen eingezogenen Rand geringfügig konisch zuläuft, um dergestalt eine verbesserte Anpresslage an dem Außenumfang des Fluidkanals sicherzustellen.

Bei besonders vorteilhaften Ausführungsbeispielen ist vorgesehen, dass der eingezogene Rand der Hülse als Teil der Querkraftabstützung eine Art Anschlagkörper ausbildet, der einen möglichen Endanschlag für das Filterelement gegenüber dem stationär angeordneten Fluidkanal bildet, der bevorzugt in das Innere des Tankgehäuses hineinragt. Dergestalt ist eine Sicherung gebildet damit das Filterelement nicht ungewollt in den Tank fällt, was insbesondere dann der Fall sein kann, wenn das Element an seinem gegenüberliegenden Ende für einen Entnahmevorgang vom Deckel gelöst ist. Des Weiteren bildet der Anschlagkörper einen möglichen Endanschlag beim Aufsetzen des Filterelementes auf den Außenumfang des Fluidkanals aus.

Vorzugsweise ist dabei der freie Innendurchmesser, der von dem eingezogenen Rand begrenzt ist, kleiner als der freie Innendurchmesser des Fluidkanals im Bereich seines benachbarten freien Endes.

Die Anordnung kann mit Vorteil ferner so getroffen sein, dass das eine freie Ende des Elementmaterials, das der einen Endkappe zugewandt ist, in ebener Anlage mit einem an die Ausnehmung angrenzenden Teil der einen Endkappe und dem stegartigen Ringflansch des Anschlagkörpers ist. Dadurch ist das stirnseitige freie Ende des Elementmaterials ebenflächig zu beiden Seiten hin anliegend abgestützt.

Bei vorteilhaften Ausführungsbeispielen sind als weiterer Teil der Führungseinrichtung und vorspringend Aufnahmestege an der Endkappe angeformt, die mit konisch aufeinander zulaufenden Führungsflächen in Richtung der Aufnahmeöffnung für das Eingreifen des Fluidkanals weisen. Die konisch zulaufenden Führungsflächen bilden dadurch eine trichterartige Einführhilfe beim Aufsetzen der Endkappe auf den Fluidkanal.

Zwecks Erhalt einer Abdichtung zwischen der Endkappe mit der Einrichtung zur Querkraftabstützung und dem in das Filterelement endseitig eingreifenden Fluidkanal ist eine umlaufende Dichtlippe an der diesbezüglichen Endkappe vorgesehen, die mit einer vorgebbaren Anlagekraft den Fluidkanal umfasst.

Vorzugsweise kann dabei die Dichtlippe als weiterer Teil der Einrichtung zur Querkraftabstützung vorgesehen sein, die mit ihrer vorgebbaren Anlagekraft zum einen als Abdichtung den Fluidkanal umfasst und zum anderen gleichzeitig sich an diesem abstützt.

Für eine verbesserte Abdichtung ist dabei ferner vorgesehen, dass die Dichtlippe in Richtung des Inneren des Filterelements mit einem radialen Überstand vorsteht, der sich mit Eingreifen des Fluidkanals in die Endkappe verringert. Mit besonderem Vorteil kann dabei die Dichtlippe einstückiger Bestandteil der einen Endkappe und elastisch nachgiebig ausgebildet sein. In vorteilhafter Weise kann dabei die Dichtlippe aus einem Kunststoff mit Elastizitätseigenschaften bestehen, die einstückiger Bestandteil der Endkappe ist oder sich an diese anspritzen lässt.

Für eine verbesserte Abdichtung ist dabei in vorteilhafter Weise vorgesehen, dass im Ausgangszustand vor Eingreifen des Fluidkanals in die Endkappe der freie Rand der umlaufenden Dichtlippe einen kleineren Durchmesser aufweist als der Außendurchmesser des Fluidkanals. Um eine verbesserte Einführung des Fluidkanals in die zugeordnete Endkappe zu erlauben, kann in vorteilhafter Weise vorgesehen sein, dass die Konizität der Führungsstege der Konizität der nach innen vorspringenden Dichtlippe entspricht.

Nachstehend ist die Erfindung anhand eines in der Zeichnung dargestellten Ausführungsbeispiels im Einzelnen erläutert. Es zeigen:
- Fig. 1: eine mit zentraler vertikaler Schnittebene aufgeschnitten gezeichnete perspektivische Schrägansicht des Ausführungsbeispiels der erfindungsgemäßen Filtervorrichtung;
- Fig. 2: eine vergrößert und abgebrochen gezeichnete, mit zentraler vertikaler Schnittebene aufgeschnittene perspektivische Schrägansicht lediglich des unteren Endbereichs des Ausführungsbeispiels; und
- Fig. 3: eine der Fig. 2 entsprechende Darstellung des auf einen Fluidkanal aufgesetzten unteren Endbereichs des Ausführungsbeispiels.

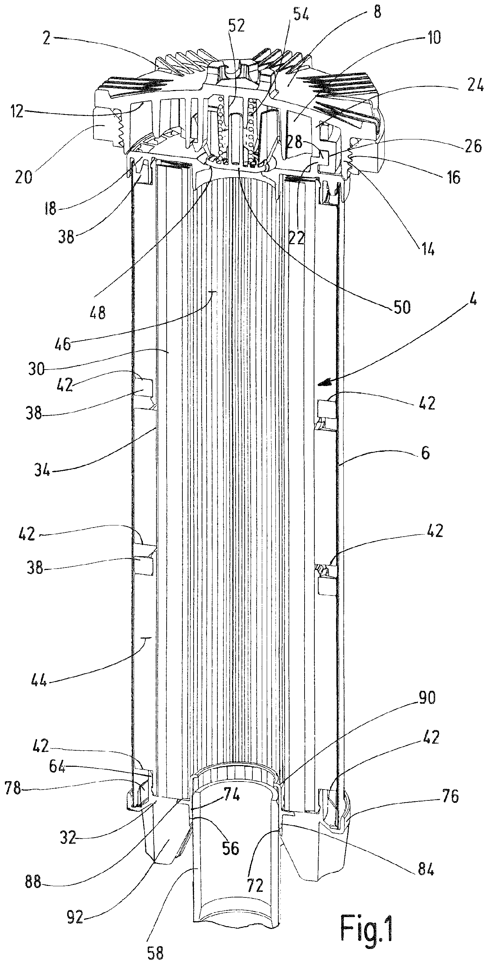

In Fig. 1, in der das als In-Tank-Filtervorrichtung ausgebildete Ausführungsbeispiel zur Gänze dargestellt ist, ist ein Deckelteil mit 2 bezeichnet. Zusammen mit einem den Außenmantel eines Filterelements 4 bildenden Abströmrohr 6 bildet das Deckelteil 2 das Filtergehäuse der Filtervorrichtung. Das kreisrunde Deckelteil 2 weist eine leicht konvex gewölbte Oberseite 8 und einen wannenförmigen Innenraum 10 auf, dessen Boden 12 eine der Wölbung der Oberseite 8 entsprechende konkave Wölbung besitzt. Seitlich ist der Innenraum 10 durch eine zylindrische Seitenwand 14 begrenzt, die ein Außengewinde 16 aufweist. Für den Einbau der Filtervorrichtung in einen nicht dargestellten Tank ist das Deckelteil 2 mit dem Außengewinde 16 der Seitenwand 14 mit einem Befestigungsflansch 20 verschraubbar, der sich an der Wandöffnung in einer oberen Tankwand des betreffenden Tanks befindet.

Zur Bildung einer lösbaren Verbindung zwischen dem Deckelteil 2 und dem Filterelement 4 als dem weiteren Gehäuseteil weist das Filterelement 4 an einer oberen Endkappe 18 eine Festlegeeinrichtung auf, die in formschlüssigen Eingriff mit einer im Innenraum 12 des Deckelteils befindlichen Halteeinrichtung bringbar ist. Die Festlegeeinrichtung der Endkappe 18 weist an ihrer Oberseite in der Nähe ihres Außenumfangs drei im Winkelabstand von 120° zueinander versetzte Festlegestege 22 auf, von denen in Fig. 1 lediglich einer sichtbar ist. Für jeden Festlegesteg 22 ist am Boden 12 des Innenraums 10 des Deckelteils 2 ein Haltekörper 24 angeformt, in dem sich ein entlang eines Kreisbogenabschnitts verlaufender Sperrkanal 26 befindet, in den eine vom zugeordneten Festlegesteg 24 abgewinkelte Sperrleiste 28 durch eine relative Drehbewegung zwischen Filterelement 4 und Deckelteil in die in Fig. 1 gezeigte Festlegeposition einfahrbar ist. Dadurch ist eine Art Bajonettverschluss für eine formschlüssige Verriegelung gebildet.

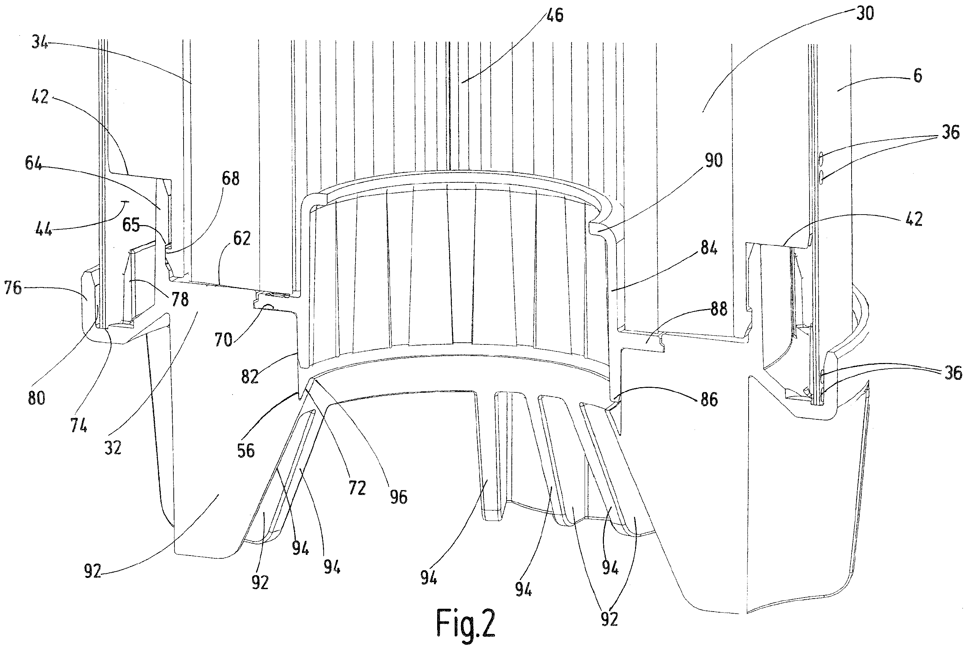

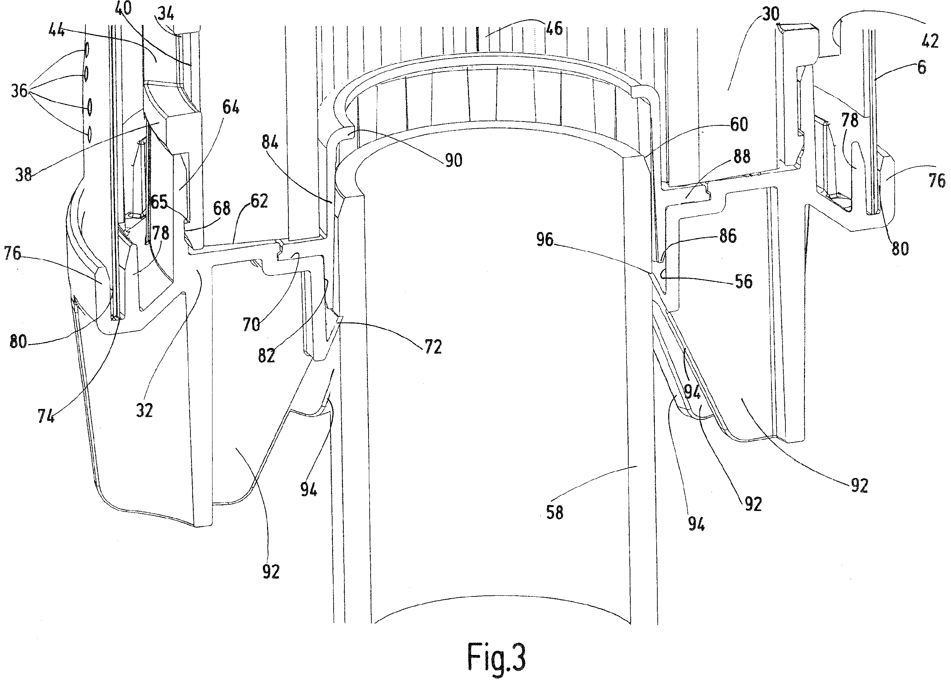

Das Filterelement 4 weist in der üblichen Weise ein hohlzylinderförmiges Elementmaterial 30 auf, das sich zwischen der oberen Endkappe 18 und einer unteren Endkappe 32 erstreckt. In den Endkappen 18 und 32 sind zusammen mit dem Elementmaterial 30 auch die Enden eines Stützrohres 34 sowie des Abströmrohres 6 aufgenommen, das mit einer den Fluiddurchgang ermöglichenden Perforation 36 (s. Fig. 2 und 3) versehen ist. Das Stützrohr 34 ist durch eine gitterartige, fluiddurchlässige Tragstruktur gebildet, die in voneinander beabstandeten Radialebenen liegende Ringsegmente 38 und diese verbindende Längsstäbe 40 aufweist (Fig. 3).

Zwischen den Ringsegmenten 38 erstrecken sich als Abstandhalter zur Innenseite des Abströmrohres 6 in Umfangsrichtung verteilte Flügel 42 in Form flacher Leisten, so dass zwischen der Außenseite des Elementmaterials 30 und dem Abströmrohr 6 ein Zwischenraum 44 gebildet ist, so dass im Filtrierbetrieb, bei dem das Fluid das Elementmaterial 30 vom inneren Filterhohlraum 46 her nach außen durchströmt, der Zwischenraum 44 die Filtratseite der Filtervorrichtung bildet, aus der das Filtrat über die Perforation 36 des Abströmrohres 6 ins Innere des Tanks austritt.

Die obere Endkappe 18 weist eine zentrale Öffnung 48 auf, die einen möglichen Durchgang vom Filterhohlraum 46 zum Innenraum 10 des Deckelteils 2 bildet, jedoch normalerweise durch den Schließkörper 50 eines im Deckelinnenraum 10 befindlichen Bypassventils geschlossen ist.

Das Bypassventil weist eine vom Boden 12 des Deckelteils 2 koaxial vorspringende Führungshülse 52 auf, in der ein Schaft des Schließkörpers 50 verschiebbar geführt ist. Das Bypassventil weist eine die Hülse 52 umgebende Druckfeder 54 auf, die den Schließkörper 50 in die Schließstellung vorspannt und zwischen diesem und dem Boden 12 eingespannt ist.

Die Fig. 2 und 3 zeigen nähere Einzelheiten des Ausführungsbeispiels im Bereich der unteren Endkappe 32. Diese weist für das Einströmen von Unfiltrat in den inneren Filterhohlraum 46 eine zentrale Öffnung 56 auf. Für die Zufuhr des Unfiltrats ist am Bodenbereich des (nicht gezeigten) Tanks ein Fluidkanal in Form eines Rohrstutzens 58 vorgesehen, der ortsfest verankert ist und am freien Ende einen abgerundeten Endrand 60 besitzt. Die untere Endkappe 32 weist als Einfassung für die zugewandten Enden des Elementmaterials 30 und des Stützrohres 34 an der Oberseite eine ebene Anlagefläche 62 auf, die radial außenseitig von einem nach oben axial vorspringenden Umfangsrand 64 begrenzt ist. Dieser weist an der Innenseite eine Rastkerbe 65 auf, in der eine Rastnase 66 des Stützrohres 34 verrastbar ist, so dass das Stützrohr 34 an der Endkappe 32 axial gesichert ist. An den Umfangsrand 64 radial nach innen anschließend weist die Anlagefläche 62 einen ebenflächigen Abschnitt auf, an den sich am radial inneren Ende eine stufenförmige, vertiefte Ausnehmung 70 anschließt, die den Übergang zur Öffnung 56 bildet.

An dem von der Ausnehmung 70 axial nach unten versetzten Ende der zentralen Öffnung 56 bildet die Endkappe 52 eine angeformte, umlaufende Dichtlippe 72, die im Querschnitt die Form einer dünnen Zunge besitzt, die sich von der Wand der Öffnung 56 abgespreizt schräg nach innen und nach oben in Richtung auf das Filterelement 4 erstreckt. Entsprechend der Elastizitätseigenschaften des die Endkappe 32 bildenden Kunststoffmaterials ist die Dichtlippe 72 elastisch nachgiebig. In dem sich an den Umfangsrand 64 radial nach außen anschließenden Umfangsbereich bildet die Endkappe 52 eine vertiefte Rinne 74, in der zwischen einem äußeren Umfangsrand 76 und einem inneren Ringkörper 78 ein schlitzförmiger Ringraum 80 gebildet ist, in dem das Abströmrohr 6 eingesteckt aufgenommen ist.

An ihrer Unterseite setzt sich die Endkappe 32, anschließend an die Ausnehmung 70, in einem kanalartigen Abschnitt 82 nach unten fort, an dessen Ende die Dichtlippe 72 angeformt ist. Der Kanalabschnitt 82 bildet zusammen mit einer Führungshülse 84 die Führung für den Rohrstutzen 58, der sich beim Aufsetzen des Filterelements 4 durch die Öffnung 56 der Endkappe 32 in den inneren Filterhohlraum 46 erstreckt. Die Hülse 84 weist oberhalb ihres unteren Endes 86 einen radial nach außen vorstehenden Ringflansch 88 auf und ist in der Öffnung 56 der Endkappe 32 so aufgenommen, dass der Ringflansch 88 passend in der Ausnehmung 70 so aufgenommen ist, dass die Oberseite des Ringflansches 88 mit der Ebene der umgebenden Anlagefläche 62 fluchtet. Das andere obere Ende der Hülse 84 weist eine Einbördelung 90 nach innen auf, die einen Anschlagkörper für den oberen Endrand 60 des Rohrstutzens 58 bildet.

Zur Bildung einer Einfahrhilfe beim Aufsetzen des Filterelements 4 weist die Endkappe 32 als Führungseinrichtung, die sich an das untere Ende der Öffnung 56 anschließt, einen Kranz angeformter, in Umfangsrichtung verteilter flügelartiger und axial nach unten vorstehender Führungsstege 92 auf, die mit ihrem radial innenliegenden Rand Führungsflächen 94 bilden, die einen konischen Verlauf nach oben und innen mit einer der Konizität der unverformten Dichtlippe 72 entsprechenden Konizität besitzen. Gemeinsam umschreiben dadurch die Führungsflächen 94 eine Art Einführtrichter, der das Aufsetzen des Filterelements 4 auf den Rohrstutzen 58 erleichtert.

Beim Aufsetzen und Einfahren in die vom Kanalabschnitt 82 der Öffnung 56 und durch die Hülse 84 gebildete Führung verringert sich der radiale Überstand des Endrandes 96 der Dichtlippe 72 aus der in Fig. 2 gezeigten Position, so dass bei der aufgesetzten, in Fig. 3 gezeigten Position die Dichtlippe 72 mit elastischer Dichtkraft am Rohrstutzen 58 abdichtet. Gleichzeitig bildet die Führung innerhalb der Hülse 84 die Querkraftabstützung für die Endkappe 32 und damit des Filterelements 4 am stationär verankerten Rohrstutzen 58. Die Querkraftabstützung kann wie gezeigt für die untere Endkappe 32, aber im Bedarfsfall auch für die obere Endkappe 18 oder für beide Endkappen 18, 32 vorgesehen sein.

## Patentansprüche

1. Filtervorrichtung mit einem Filtergehäuse (2, 6), in dem ein austauschbares Filterelement (4) aufgenommen ist und das ein Deckelteil (2) aufweist, wobei das Elementmaterial (30) des Filterelementes (4) endseitig von mindestens einer Endkappe (32) begrenzt ist, wobei mindestens diese eine Endkappe (32) des Filterelements (4) auf einen Fluidkanal (58) aufgesetzt ist und dass zwischen dieser einen Endkappe (32) und dem Fluidkanal (58) eine Einrichtung (84) zur Querkraftabstützung für das Filterelement (4) vorgesehen ist, die das Filterelement (4) gegenüber dem in das Innere des Filterelementes (4) zumindest teilweise endseitig eingreifenden Fluidkanal (58) abstützt, **dadurch gekennzeichnet, dass** die Einrichtung (84) zur Querkraftabstützung aus einer Hülse gebildet ist, die auf der einen Seite einen nach innen eingezogenen Rand (90) aufweist und auf der anderen Seite als Teil einer Führung für den Fluidkanal (58) eine Umfassungswand bildet, und dass außenumfangsseitig an der Umfassungswand ein stegartiger Ringflansch (88) ausgebildet ist, der in eine stufenförmige Ausnehmung (70) in der einen Endkappe (32) eingreift.

2. Filtervorrichtung nach Anspruch 1, **dadurch gekennzeichnet, dass** die Endkappe (32) die Einrichtung (84) zur Querkraftabstützung aufweist, die vorzugsweise als Einsatzteil ausgebildet mit der Endkappe (32) verbunden ist.

3. Filtervorrichtung nach Anspruch 1 oder 2, **dadurch gekennzeichnet, dass** der eingezogene Rand (90) eine Art Anschlagkörper ausbildet, der einen möglichen Endanschlag für das Filterelement (4) gegenüber dem stationär angeordneten Fluidkanal (58) bildet.

4. Filtervorrichtung nach einem der vorstehenden Ansprüche, **dadurch gekennzeichnet, dass** der freie Innendurchmesser, der von dem eingezogenen Rand (90) begrenzt ist, kleiner ist als der freie Innendurchmesser des Fluidkanals (58) im Bereich seines freien Endes.

5. Filtervorrichtung nach einem der vorstehenden Ansprüche, **dadurch gekennzeichnet, dass** das eine freie Ende des Elementmaterials (30), das der einen Endkappe (32) zugewandt ist, in ebener Anlage mit einem an die Ausnehmung (70) angrenzenden Teil (62) der einen Endkappe (32) und dem stegartigen Ringflansch (88) des Anschlagkörpers (90) ist.

6. Filtervorrichtung nach einem der vorstehenden Ansprüche, **dadurch gekennzeichnet, dass** als weiterer Teil der Führung Aufnahmestege (92) an der Endkappe (32) vorstehend angeformt sind, die mit konisch aufeinander zulaufenden Führungsflächen (94) in Richtung der Aufnahmeöffnung (56) für das Eingreifen des Fluidkanals (58) weisen.

7. Filtervorrichtung nach einem der vorstehenden Ansprüche, **dadurch gekennzeichnet, dass** die Endkappe (32) eine umlaufende Dichtlippe (72) aufweist, die mit einer vorgebbaren Anlagekraft den Fluidkanal (58) umfasst.

8. Filtervorrichtung nach Anspruch 7, **dadurch gekennzeichnet, dass** die Dichtlippe (72) als weiterer Teil der Einrichtung (84) zur Querkraftabstützung mit der vorgebbaren Anlagekraft als Abdichtung den Fluidkanal (58) umfasst und sich an diesem abstützt.

9. Filtervorrichtung nach Anspruch 7 oder 8, **dadurch gekennzeichnet, dass** die Dichtlippe (72) in Richtung des Inneren (46) des Filterelements (4) mit einem radialen Überstand vorsteht, der sich mit Eingreifen des Fluidkanals (58) in die Endkappe (4) verringert.

10. Filtervorrichtung nach einem der Ansprüche 7 bis 9, **dadurch gekennzeichnet, dass** die Dichtlippe (72) einstückiger Bestandteil der einen Endkappe (32) und elastisch nachgiebig ausgebildet ist.

11. Filtervorrichtung nach einem der Ansprüche 7 bis 10, **dadurch gekennzeichnet, dass** die Aufnahmeöffnung (56) für das Eingreifen des Fluidkanals (58) von der Dichtlippe (72) begrenzt ist.

12. Filtervorrichtung nach einem der Ansprüche 7 bis 11, **dadurch gekennzeichnet, dass** im Ausgangszustand vor Eingreifen des Fluidkanals (58) in die Endkappe (72) der freie Rand (96) der umlaufenden Dichtlippe (72) einen kleineren Durchmesser aufweist als der Außendurchmesser des Fluidkanals (58).

13. Filtervorrichtung nach einem der vorstehenden Ansprüche, **dadurch gekennzeichnet, dass** die Konizität der Führungsstege (94) der Konizität der vorspringenden Dichtlippe (72) entspricht.

## Claims

1. Filter device with a filter housing (2, 6) in which a replaceable filter element (4) is received and which comprises a lid part (2), wherein the end of the element material (30) of the filter element (4) is delimited by at least one end cap (32), wherein at least this one end cap (32) of the filter element (4) is positioned on a fluid duct (58) and in that an apparatus (84) for transverse force support for the filter element (4) is provided between this one end cap (32) and the fluid duct (58), said apparatus (84) supporting the filter element (4) with respect to the fluid duct (58) engaging inside the filter element (4) at least partially at the ends, **characterised in that** the apparatus (84) for transverse force support is formed by a sleeve which comprises an inwardly retracted edge (90) on one side and forms a surrounding wall on the other side as part of a guide for the fluid duct (58), and **in that** a web-like annular flange (88) is formed on the outer circumferential side on the surrounding wall, said flange engaging in a step-shaped recess (70) in the one end cap (32).

2. Filter device according to claim 1, **characterised in that** the end cap (32) comprises the apparatus (84) for transverse force support, which is preferably designed as an insert part connected to the end cap (32).

3. Filter device according to either claim 1 or claim 2, **characterised in that** the retracted edge (90) forms a kind of stop body, which forms a possible end stop for the filter element (4) with respect to the fluid duct (58), which is arranged in a stationary manner.

4. Filter device according to any of the preceding claims, **characterised in that** the free inner diameter, which is delimited by the retracted edge (90), is smaller than the free inner diameter of the fluid duct (58) in the region of its free end.

5. Filter device according to any of the preceding claims, **characterised in that** the one free end of the element material (30) that is facing the one end cap (32) is in flat contact with a part (62) of the one end cap (32) adjacent to the recess (70) and the web-like annular flange (88) of the stop body (90).

6. Filter device according to any of the preceding claims, **characterised in that**, as a further part of the guide, receiving webs (92) are integrally formed in a protruding manner on the end cap (32), said receiving webs pointing with guide surfaces (94) running conically towards one another in the direction of the receiving opening (56) for engagement of the fluid duct (58).

7. Filter device according to any of the preceding claims, **characterised in that** the end cap (32) comprises a circumferential sealing lip (72) which surrounds the fluid duct (58) with a predefinable contact force.

8. Filter device according to claim 7, **characterised in that** the sealing lip (72), as a further part of the apparatus (84) for transverse force support, surrounds the fluid duct (58) with the predefinable contact force as a seal, and is supported thereon.

9. Filter device according to claim 7 or 8, **characterised in that** the sealing lip (72) protrudes with a radial overhang in the direction of the inside (46) of the filter element (4), said overhang reducing as the fluid duct (58) engages in the end cap (4).

10. Filter device according to any of claims 7 to 9, **characterised in that** the sealing lip (72) is an integral part of the one end cap (32) and is designed to be elastically flexible.

11. Filter device according to any of claims 7 to 10, **characterised in that** the receiving opening (56) for engagement of the fluid duct (58) is delimited by the sealing lip (72).

12. Filter device according to any of claims 7 to 11, **characterised in that**, in the original state before engagement of the fluid duct (58) in the end cap (72), the free edge (96) of the circumferential sealing lip (72) has a smaller diameter than the outer diameter of the fluid duct (58).

13. Filter device according to any of the preceding claims, **characterised in that** the conicality of the guide webs (94) corresponds to the conicality of the protruding sealing lip (72).

## Revendications

1. Installation de filtration comprenant une enveloppe (2, 6) de filtre, dans laquelle est logé un élément (4) de filtre remplaçable et qui a une partie (2) de couvercle, dans laquelle la matière (30) de l'élément (4) de filtre est délimitée du côté de l'extrémité par au moins
une coiffe (32) d'extrémité, dans laquelle au moins cette une coiffe (32) d'extrémité de l'élément (4) de filtre est posée sur un conduit (58) pour du fluide et en ce que, entre cette une coiffe (32) d'extrémité et le conduit (58) pour du fluide, est prévu un dispositif (84) pour l'appui en force transversale de l'élément (4) de filtre, qui appuie l'élément (4) de filtre contre le conduit (58) pour du fluide pénétrant du côté de l'extrémité au moins en partie à l'intérieur de l'élément (4) de filtre, **caractérisée en ce que** le dispositif (84) pour l'appui en force transversale est formé d'un manchon, qui a d'un côté un bord (90) rentré vers l'intérieur et qui forme de l'autre côté comme partie d'un guidage pour le conduit (58) pour du fluide une paroi de pourtour, et **en ce que**, du côté du pourtour extérieur, est formée sur la paroi de pourtour une bride (88) annulaire de type barrette, qui pénètre dans un évidement (70) en gradin de la une coiffe (32) d'extrémité.

2. Installation de filtration suivant la revendication 1, **caractérisée en ce que** la coiffe (32) d'extrémité comporte le dispositif (84) pour l'appui en force transversale, qui, constitué de préférence sous la forme d'un insert, est assemblé à la coiffe (32) d'extrémité.

3. Installation de filtration suivant la revendication 1 ou 2, **caractérisée en ce que** le bord (90) rentré constitue une sorte de pièce de butée, qui forme une butée d'extrémité éventuelle pour l'élément (4) de filtre par rapport au conduit (58) pour du fluide monté fixe.

4. Installation de filtration suivant l'une des revendications précédentes, **caractérisée en ce que** le diamètre intérieur libre, qui est délimité par le bord (90) rentré, est plus petit que le diamètre intérieur libre du conduit (58) pour du fluide dans la partie de son extrémité libre.

5. Installation de filtration suivant l'une des revendications précédentes, **caractérisée en ce que** la une extrémité libre de la matière (30) de l'élément, qui est tournée vers la une coiffe (32) d'extrémité, est en contact plan avec une partie (62), voisine de l'évidement (70), de la une coiffe (32) d'extrémité et avec la bride (88) annulaire de type barrette de la pièce (90) de butée.

6. Installation de filtration suivant l'une des revendications précédentes, **caractérisée en ce que**, comme autre partie du guidage, viennent de matière en saillie de la coiffe (32) d'extrémité des entretoises (92) de réception, qui, par des surfaces (94) de guidage courant l'une vers l'autre coniquement, pointent en direction de l'ouverture (56) de réception pour la pénétration du conduit (58) pour du fluide.

7. Installation de filtration suivant l'une des revendications précédentes, **caractérisée en ce que** la coiffe (32) d'extrémité a une lèvre (72) d'étanchéité faisant le tour, qui enserre le conduit (58) pour du fluide avec une force de contact pouvant être donnée à l'avance.

8. Installation de filtration suivant la revendication 7, **caractérisée en ce que** la lèvre (72) d'étanchéité comprend, comme autre partie du dispositif (84), pour l'appui en force transversale avec la force de contact pouvant être donnée à l'avance, le conduit (58) pour du fluide comme étanchéité et s'appuie sur celui-ci.

9. Installation de filtration suivant la revendication 7 ou 8, **caractérisée en ce que** la lèvre (72) d'étanchéité fait saillie dans la direction de l'intérieur (46) de l'élément (4) de filtre d'un dépassement radial, qui diminue au fur et à mesure que le conduit (58) pour du fluide pénètre dans la coiffe (4) d'extrémité.

10. Installation de filtration suivant l'une des revendications 7 à 9, **caractérisée en ce que** la lèvre (72) d'étanchéité est une partie constitutive d'une seule pièce de la une coiffe (32) d'extrémité et est constituée de manière à céder élastiquement.

11. Installation de filtration suivant l'une des revendications 7 à 10, **caractérisée en ce que** l'ouverture (56) de réception pour la pénétration du conduit (58) pour du fluide est délimitée par la lèvre (72) d'étanchéité.

12. Installation de filtration suivant l'une des revendications 7 à 11, **caractérisée en ce que**, dans l'état initial avant la pénétration du conduit (58) pour du fluide dans la coiffe (72) d'extrémité, le bord (96) libre de la lèvre (72) d'étanchéité faisant le tour a un diamètre plus petit que le diamètre extérieur du conduit (58) pour du fluide.

13. Installation de filtration suivant l'une des revendications précédentes, **caractérisée en ce que** la conicité des entretoises (94) de guidage correspond à la conicité de la lèvre (72) d'étanchéité en saillie.
